# EUROPÄISCHE PATENTSCHRIFT

(11) **EP 0 974 758 B1**
(45) Veröffentlichungstag und Bekanntmachung des Hinweises auf die Patenterteilung: **14.08.2002**
(21) Anmeldenummer: 99111561.9
(22) Anmeldetag: 15.06.1999
(51) Int. Cl.: F16B 13/08, F16B 13/06

(54) **Spreizanker aus Metall**
Metallic expansion anchor
Dispositif d'ancrage à cheville expansible métallique

(30) Priorität: 23.07.1998 DE 19833070
(43) Veröffentlichungstag der Anmeldung: 26.01.2000
(73) Patentinhaber: fischerwerke Artur Fischer GmbH & Co. KG, 72178 Waldachtal (DE)
(72) Erfinder: Gallatz, Armin, 72186 Empfingen (DE); Linka, Martin, 72160 Horb a.N. (DE)

(56) Entgegenhaltungen:
- EP-A- 0 385 117
- DE-U- 8 003 328
- FR-A- 1 322 067
- GB-A- 613 232
- US-A- 3 958 488

## Beschreibung

Die Erfindung betrifft einen Spreizanker aus Metall zur Befestigung in weichen oder Hohlräume aufweisenden Baustoffen, wie Porenbeton, Hohlkammerbausteine und dgl., gemäß der Gattung des Anspruches 1, bzw. 2.

Ein gattungsgemäßer Spreizanker für eine Verwendung in Hinterschnittbohrungen ist aus der EP-A-0 385 117 bekannt. Der Spreizanker besteht aus einem Gewindebolzen, der eine durch Ausknicken aufspreizbare Spreizhülse durchdringt. Die Spreizhülse weist mehrere durch Schlitze gebildete Schenkel auf, die an ihrem hinteren Ende in einer Kopfhülse enden und deren vordere Enden freistehend sind. Zum Verankern des bekannten Spreizankers wird der Gewindebolzen mittels einer Mutter in Richtung Bohrlochmündung gezogen, so dass ein mit einem Bund versehenes vorderes Ende des Gewindebolzens die zwischen der Mutter und dem Bund angeordnete Spreizhülse axial zusammendrückt. Dadurch knicken die Schenkel der Spreizhülse radial nach außen und verspreizen in einer Hinterschneidung.

Um das Ausknicken der Schenkel zu erleichtern weist die Spreizhülse des gekannten Spreizankers Querschnittsschwächungen in Form umlaufender Einkerbungen am Übergang von der Kopfhülse zu den Schenkeln und in einem mittleren Bereich der Schenkel auf. Die umlaufenden Einkerbungen bilden Knickstellen der Schenkel. Da der Gewindebolzen des bekannten Spreizankers drehbar in der Spreizhülse einliegt kann der Gewindebolzen beim Anziehen der Mutter mitdrehen. Dies hat zur Folge, dass der Bund des Gewindebolzens nicht in Richtung Bohrlochmündung gezogen und die Spreizhülse nicht axial zusammengedrückt wird und die Schenkel nicht ausknicken.

Der Erfindung liegt die Aufgabe zugrunde, einen Spreizanker der gattungsgemäßen Art derart zu verbessern, dass ein Mitdrehen des Gewindebolzens beim Anziehen einer Mutter oder eines sonstigen, ein Innengewinde aufweisenden Spannelements, nicht mitdreht.

Die Lösung dieser Aufgabe wird durch die im Anspruch 1 bzw. 2 angegebenen Merkmale erreicht. Die Schenkel der Spreizhülse sind lediglich an ihrem hinteren Ende einstückig an einer Kopfhülse angebunden, während die vorderen Enden der Schenkel freistehend sind. Diese Enden sitzen auf einer rechtwinklig zur Längsachse des Spreizankers ausgebildeten Stützfläche eines am vorderen Ende des Gewindebolzens angeordneten Bundes auf, so dass beim Ausknicken der Schenkel an dieser Stelle keine Materialverformung erforderlich ist. Die Schenkel können somit an dieser Stelle ihre volle Breite aufweisen. In Verbindung mit den Querschnittsschwächungen an den weiteren Knickstellen genügt somit ein relativ geringes Eindrehmoment, um die erforderliche Einzugskraft für das Ausknicken der außerhalb der Querschnittsschwächungen großflächigen Schenkel zu erreichen. Zur Aufnahme des Drehmoments und Vermeidung des Mitdrehens, sowie zur weiteren Reduzierung des aufzubringenden Drehmoments können die Schenkel geringfügig vorgeknickt sein, so dass sie sich im Bohrloch beim Einsetzen des Spreizankers bereits verspannen.

Um ein Mitdrehen des Gewindebolzens beim Aufspreizen zu vermeiden sind Stirnflächen der freien Enden der Schenkel der Spreizhülse des erfindungsgemäßen Spreizankers konkav ausgebildet. Dadurch entstehen Spitzen an den Stirnflächen, die sich in die Stützfläche des Bundes eindrücken und somit ein Mitdrehen des Gewindebolzens verhindern.

In einer alternativen Ausführungsform der Erfindung sind die Stirnflächen der freien Enden der Schenkel der Spreizhülse schräg ausgebildet. Auch dadurch sind Spitzen an den Stirnflächen der Schenkel gebildet, die sich beim axialen Zusammendrücken der Spreizhülse durch Anziehen der auf den Gewindebolzen aufgesetzten Mutter in den Bund eindrücken und ein Mitdrehen des Gewindebolzens verhindern. Beim weiteren Einziehen werden jedoch die Schenkel durch die schräge Stirnfläche tangential auf dem Bund nach außen gedrückt, so dass sich der vordere Teil des Schenkels unterhalb der mittleren Querschnittsschwächung gegenüber dem oberen Teil des Schenkels beim Ausknicken nach außen wegdreht. Dieser Teil des Schenkels füllt somit die Lücke zwischen zwei benachbarten ausgeknickten Schenkeln aus, so dass sich eine etwa quadratische größere Ausknickfläche als Gegenlager bildet, die insbesondere in weichen Vollbaustoffen wie Gasbeton zu einem höheren Haltewert führt.

Zur weiteren Reduzierung des Drehmoments kann in einer weiteren Ausgestaltung der Erfindung die Spreizhülse durch vier Schenkel gebildet sein, wobei zwei sich gegenüberliegende Schenkel an ihrem vorderen Ende mit einem auf der Stützfläche des Bundes aufsitzenden Fortsatz verlängert sind. Damit werden zunächst nur die beiden mit dem Fortsatz versehenen Schenkel ausgeknickt und verspreizt. Erst nach einem der Höhe des Fortsatzes entsprechenden Einzugsweg kommen die Enden der beiden anderen Schenkel zur Anlage am Bund und knicken ebenfalls beim weiteren Einziehen des Bundes radial nach außen.

Die Querschnittsschwächungen sind durch die Breite der Schenkel reduzierende halbkreisförmige Aussparungen und/oder durch die Wandungsdicke der Schenkel reduzierende Einkerbungen gebildet, wobei am Übergang zur Kopfhülse die Einkerbungen an der Außenfläche und im mittleren Bereich der Schenkel an der Innenfläche angeordnet sind.

Zur Begrenzung der Ausknickung können am Gewindebolzen ein oder mehrere radial abstehende Ausprägungen angeordnet sein, die sich im ungespreizten Zustand der Spreizhülse auf der Höhe der mittleren Knickstelle der Schenkel befinden. Durch das Heranziehen des Bundes bewegen sich die Ausprägungen von der mittleren Knickstelle zu der am Übergang zur Kopfhülse gebildeten Knickstelle. Stößt die Ausprägung an der Kopfhülse an, ist ein weiteres Einziehen des Bundes nicht mehr möglich. In dieser Position ist die größtmögliche Ausknickung mit dem höchsten Haltewert erreicht.

In der Patentzeichnung sind Ausführungsbeispiele der Erfindung dargestellt. Es zeigen:
- Figur 1: den erfindungsgemäßen Spreizanker in Seitenansicht;
- Figur 2: den in einem Hohlkammerbaustein verankerten Spreizanker nach Figur 1;
- Figur 3: die Stanzkontur der Spreizhülse des Spreizankers nach Figur 1;
- Figur 4: eine weitere Ausführungsform des in einem Bohrloch eines weichen Vollbaustoffes eingesetzten Spreizanker;
- Figur 5: den Spreizanker nach Figur 4 im aufgespreizten Zustand gemäß dem in Figur 4 angegebenen Schnitt A-A;
- Figur 6: die Stanzkontur der Spreizhülse des Spreizankers gemäß Figur 4;
- Figur 7: eine weitere Ausführungsform des Spreizankers und
- Figur 8: die Stanzkontur der Spreizhülse des Spreizankers gemäß Figur 7

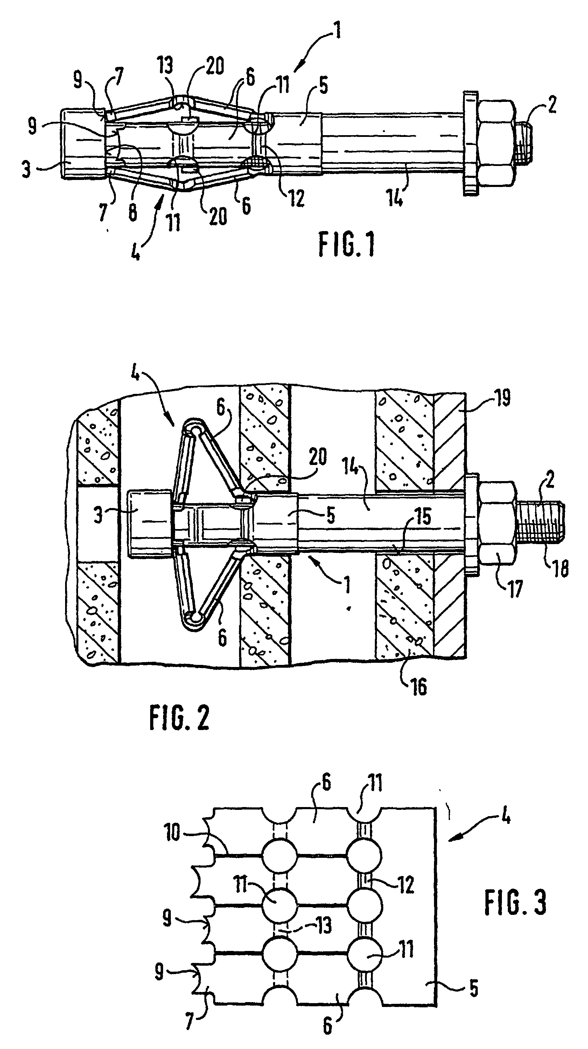

Der Spreizanker 1 nach Figur 1 und 2 besteht aus einem Gewindebolzen 2, der an seinem vorderen Ende einen Bund 3 aufweist. Auf dem Gewindebolzen 2 ist eine Spreizhülse 4 angeordnet. Sie besteht aus einer Kopfhülse 5, von der vier Schenkel 6 ausgehen, deren vorderes Ende freistehend ist. In dem in Figur 1 dargestellten Ausführungsbeispiel weisen zwei sich gegenüberliegende Schenkel 6 einen Fortsatz 7 auf, dessen Stirnfläche auf der rechtwinklig zur Längsachse des Spreizankers 1 ausgebildeten Stützfläche 8 des Bundes 3 aufsitzt. Die Stirnfläche 9 der Schenkel 6 bzw. der Fortsätze 7 sind konkav ausgebildet, so daß die Ränder der Stirnflächen Spitzen bilden, die einerseits ein Mitdrehen des Gewindebolzens 2 und andererseits ein Abrutschen der Schenkel 6 von der Stützfläche 8 des Bundes 3 verhindern.

Die Spreizhülse 4 wird in einem Stanz- und Biegewerkzeug hergestellt. Die entsprechende Stanzkontur ist in Figur 3 dargestellt. Die Schenkel 6 entstehen durch Schlitze 10, die vom vorderen Ende der Platine ausgehen und sich über einen Teil der Länge erstrecken. Der ungeschlitzte Teil bildet nach dem Zusammenrollen die Kopfhülse 5. Die Knickstellen der Spreizhülse 4 ergeben sich durch Querschnittsschwächungen, die zum einen im Anschluß an die Kopfhülse 5 und zum anderen im mittleren Bereich der Schenkel 6 vorgesehen sind. Die Querschnittsschwächung an den Knickstellen erfolgt durch die Breite der Schenkel 6 reduzierende halbkreisförmige Aussparungen 11. Zur weiteren Reduzierung der Knickkraft sind quer zur Längsrichtung des Spreizankers zwischen den Aussparungen 11 liegende Einkerbungen 12, 13 vorgesehen, wobei die im Anschluß an die Kopfhülse 5 angeordneten Einkerbungen 12 an der Außenfläche und die im mittleren Bereich liegenden Einkerbungen 13 an der Innenfläche der Schenkel 6 angeordnet sind.

Um den Spreizanker 1 an unterschiedliche Dicken des zu befestigenden Gegenstandes anpassen und die Verankerungstiefe variieren zu können, kann entweder die Kopfhülse 5 einstückig verlängert oder -wie im Ausführungsbeispiel gezeigt- eine Distanzhülse 14 auf dem Gewindebolzen 2 übergestülpt sein.

Figur 2 zeigt den in einem Bohrloch 15 eines Hohlkammerbausteines 16 eingesetzten und verankerten Spreizanker 1. Durch Aufdrehen der Mutter 17 auf den Gewindeabschnitt 18 des Gewindebolzens 2 wird einerseits das Bauteil 19 an die Außenfläche des Hohlkammerbausteines 16 verspannt und andererseits der Bund 3 in Richtung Bohrlochmündung bewegt. Dadurch knicken die Schenkel 6 der Spreizhülse 4 an den durch die Querschnittsschwächungen gebildeten Knickstellen aus und bilden ein Gegenlager an der Rückseite eines Steges des Hohlkammerbausteines 16. Bei Erreichen der maximalen Ausknickung stoßen die am Gewindebolzen 2 angeordneten, radial abstehenden Vorsprünge 20, die sich im ungespreizten Zustand des Spreizankers etwa auf der Höhe der mittleren Knickstelle der Spreizhülse 4 befinden, an der Kopfhülse 5 an. Sie begrenzen damit den weiteren Einzugsweg des Gewindebolzens 2.

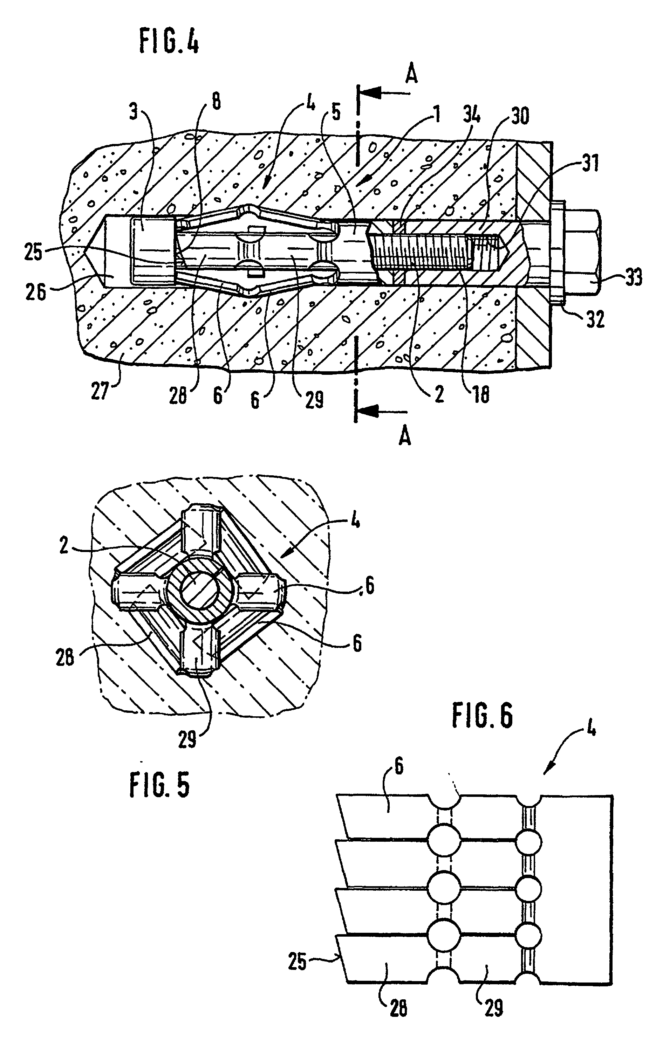

Bei der in Figur 4 dargestellten Ausführungsform des Spreizankers 1 sind die Stirnflächen 25 der freien Enden der Schenkel 6 schräg ausgebildet. Beim Heranziehen des Gewindebolzens 2 stützen sich die Stirnflächen 25 an ihrer höchsten Stelle an der Stützfläche 8 des Bundes 3 ab, so daß die Schenkel 6 radial nach außen knicken und sich im Bohrloch 26 eines bspw. aus Poroton bestehenden Bauteiles 27 verspreizen. Mit zunehmender Zugkraft gleiten die freien Enden der Schenkel 6 aufgrund der schräg ausgebildeten Stirnflächen 25 tangential auf der Stützfläche 8 des Bundes 3 soweit nach außen, bis anstelle der Stirnfläche die kürzere Längskante des vorderen Abschnitts 28 des Schenkels 6 zur Anlage kommt. Gleichzeitig verdreht sich der vordere Abschnitt 28 gegenüber dem hinteren Abschnitt 29 des Schenkels 6 um etwa 45 Grad (siehe Figur 5), so daß die ausgeknickten Schenkel 6 ein annähernd quadratisches Gegenlager als Hinterschnitt in dem Baustoff bilden. Damit ergeben sich insbesondere in weichen Baustoffen wie Poroton sehr hohe Haltewerte.

Bei dem Ausführungsbeispiel nach Figur 4 wird der Gewindebolzen 2 über ein Schaftteil 30 eingezogen, das zu diesem Zweck ein den Gewindeabschnitt 18 des Gewindebolzens 2 aufnehmendes Innengewinde 31 aufweist. Zum Aufbringen des Drehmoments ist das Schaftteil 30 mit einem einstückig angeformten Flansch 32 und einem Sechskantkopf 33 ausgestattet. Zur Verminderung der Gleitreibung ist zwischen der Stirnseite des Schaftteiles 30 und der Stirnseite der Spreizhülse 4 ein Gleitring 34 angeordnet.

Figur 6 zeigt die Stanzkontur der Spreizhülse 4 in der in Figur 4 dargestellten Ausführungsform des Spreizankers 1, wobei im Gegensatz zu der in Figur 3 dargestellten Stanzkontur alle vier Schenkel 6 gleich lang sind und die Stirnflächen 25 der freien Enden der Schenkel 6 schräg ausgebildet sind.

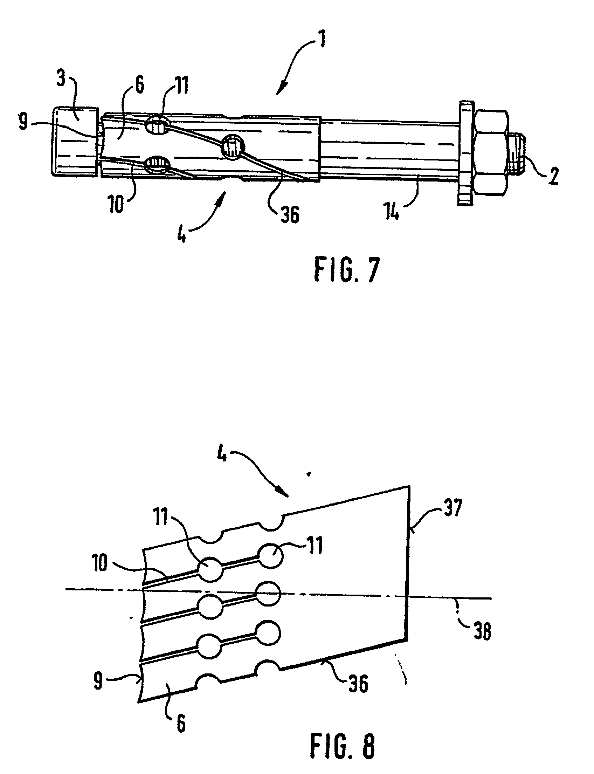

Bei der in Figur 7 dargestellten Ausführungsform des Spreizankers 1 ist die in Figur 8 dargestellte Stanzkontur der Spreizhülse 4 als Parallelogramm ausgebildet, wobei die die Schenkel 6 bildenden Schlitze 10 parallel zu den Seitenrändern 36 verlaufen. Die Schlitze 10 enden jeweils in den Aussparungen 11. Nach dem Zusammenrollen der Platine zu der zylindrischen Spreizhülse 4 über die rechtwinklig zu den Stirnkanten 37 stehende Rollachse 38 erstrecken sich die Schlitze 10 wendelförmig über einen Teil der Länge der Spreizhülse 4. Der durch die Längskanten 36 gebildete Schlitz verläuft über die gesamte Länge der Spreizhülse 4. Durch die wendelförmige Anordnung der Stege 6 wird das Ausknicken beim Spreizen des Spreizankers erleichtert.

## Patentansprüche

1. Spreizanker aus Metall zur Befestigung in weichen oder Hohlräume aufweisenden Baustoffen, wie Porenbeton, Hohlkammerbausteinen oder dgl., bestehend aus einer durch Ausknicken ihrer durch Schlitze (10) gebildeten Schenkel (6) aufspreizbaren Spreizhülse (4) und einem Gewindebolzen (2), an dessen vorderem Ende ein eine rechtwinklig zur Längsachse des Spreizankers (1) ausgebildete Stützfläche (8) für die Spreizhülse (4) aufweisender Bund (3) angeordnet ist, wobei die Schenkel (6) der Spreizhülse (4) an ihrem hinteren Ende an einer Kopfhülse (5) einstückig angesetzt und an ihrem vorderen Ende freistehend sind, wobei die freistehenden Enden sich auf der Stützfläche (8) des Bundes (3) abstützen, und wobei die Schenkel (6) durch Querschnittsschwächungen (11, 12, 13) am Übergang der Schenkel (6) zur Kopfhülse (5) und im Mittelbereich der Schenkel Knickstellen bilden, **dadurch gekennzeichnet, dass** Stirnflächen (9) der freien Enden der Schenkel (6) konkav ausgebildet sind.

2. Spreizanker aus Metall zur Befestigung in weichen oder Hohlräume aufweisenden Baustoffen, wie Porenbeton, Hohlkammerbausteinen oder dgl., bestehend aus einer durch Ausknicken ihrer durch Schlitze (10) gebildeten Schenkel (6) aufspreizbaren Spreizhülse (4) und einem Gewindebolzen (2), an dessen vorderem Ende ein eine rechtwinklig zur Längsachse des Spreizankers (1) ausgebildete Stützfläche (8) für die Spreizhülse (4) aufweisender Bund (3) angeordnet ist, wobei die Schenkel (6) der Spreizhülse (4) an ihrem hinteren Ende an einer Kopfhülse (5) einstückig angesetzt und an ihrem vorderen Ende freistehend sind, wobei die freistehenden Enden sich auf der Stützfläche (8) des Bundes (3) abstützen, wobei dass die Schenkel (6) durch Querschnittsschwächungen (11, 12, 13) am Übergang der Schenkel (6) zur Kopfhülse (5) und im Mittelbereich der Schenkel Knickstellen bilden, **dadurch gekennzeichnet, dass** die Stirnflächen (9) der freien Enden der Schenkel (6) schräg ausgebildet sind

3. Spreizanker nach Anspruch 1 oder 2, **dadurch gekennzeichnet, dass** die Spreizhülse (4) durch vier Schenkel (6) gebildet ist, wobei zwei sich gegenüberliegende Schenkel an ihrem vorderen Ende mit einem auf der Stützfläche (8) des Bundes (3) aufsitzenden Fortsatz (7) verlängert sind.

4. Spreizanker nach Anspruch 1 oder 2, **dadurch gekennzeichnet, dass** die Querschnittsschwächungen durch die Breite der Schenkel (6) reduzierende halbkreisförmige Aussparungen (11) gebildet sind.

5. Spreizanker nach Anspruch 1 oder 2, **dadurch gekennzeichnet, dass** die Querschnittsschwächungen durch die Wandungsdicke der Schenkel (6) reduzierende Einkerbungen (12, 13) gebildet sind.

6. Spreizanker nach Anspruch 5, **dadurch gekennzeichnet, dass** die Einkerbungen (12) als Querschnittsschwächungen am Übergang zur Kopfhülse (5) an der Außenfläche und die Einkerbungen (13) als Querschnittsschwächungen im Mittelbereich an der Innenfläche der Schenkel (6) angeordnet sind.

7. Spreizanker nach Anspruch 1 oder 2, **dadurch gekennzeichnet, dass** die Spreizhülse (4) mit einer an ihrer Kopfhülse (5) aufsitzenden Distanzhülse (14) verlängert ist, die vom Gewindebolzen (2) mit einem Teil seines Gewindeabschnitts (18) überragt wird.

8. Spreizanker nach Anspruch 1 oder 2, **dadurch gekennzeichnet, dass** auf den die Spreizhülse (4) überragenden Abschnitt des Gewindebolzens (2) ein Schaftteil (30) mit Innengewinde (31) und Schraubenkopf (33) aufschraubbar ist.

9. Spreizanker nach Anspruch 8, **dadurch gekennzeichnet, dass** zwischen dem Schaftteil (30) und der Kopfhülse (5) der Spreizhülse (4) ein Gleitring (34) angeordnet ist.

10. Spreizanker nach Anspruch 1 oder 2, **dadurch gekennzeichnet, dass** am Gewindebolzen (2) ein oder mehrere radial abstehende Vorsprünge (20) angeordnet sind, die sich auf der Höhe der mittleren Knickstelle (6) befinden.

11. Spreizanker nach Anspruch 1 oder 2, **dadurch gekennzeichnet, dass** die Schenkel (6) geringfügig vorgeknickt sind.

12. Spreizanker nach Anspruch 1 oder 2, **dadurch gekennzeichnet, dass** die Schenkel (6) der Spreizhülse (4) durch wendelförmig angeordnete Schlitze (10) gebildet sind.

## Claims

1. An expansible anchor of metal for fixing in building materials that are soft or have cavities, such as foam mortar, cavity building blocks and the like, consisting of an expansible sleeve (4), expandable by sharp outward bending of its limbs (6) formed by slits (10), and of a threaded bolt (2), at the front end of which is arranged a collar (3) having a supporting surface (8), formed at right angles to the longitudinal axis of the expansible anchor (1), for the expansible sleeve (4), the limbs (6) of the expansible sleeve (4) at their rear end integrally adjoining a head sleeve (5) and at their front end being free-standing, the free-standing ends being supported on the supporting surface (8) of the collar (3), and the limbs (6) forming bending points by virtue of cross-sectional weakenings (11,12,13) at the transitions of the limbs (6) to the head sleeve (5) and in the middle region of the limbs, **characterized in that** front faces (9) of the free ends of the limbs (6) are of concave construction.

2. An expansible anchor of metal for fixing in building materials that are soft or have cavities, such as foam mortar, cavity building blocks and the like, consisting of an expansible sleeve (4), expandable by sharp outward bending of its limbs (6) formed by slits (10), and of a threaded bolt (2), at the front end of which is arranged a collar (3) having a supporting surface (8), formed at right angles to the longitudinal axis of the expansible anchor (1), for the expansible sleeve (4), the limbs (6) of the expansible sleeve (4) at their rear end integrally adjoining a head sleeve (5) and at their front end being free-standing, the free-standing ends being supported on the supporting surface (8) of the collar (3), the limbs (6) forming bending points by virtue of cross-sectional weakenings (11,12,13) at the transitions of the limbs (6) to the head sleeve (5) and in the middle region of the limbs, **characterized in that** the end faces (9) of the free ends of the limbs (6) are of angled construction.

3. Expansible anchor according to claim 1 or 2, **characterized in that** the expansible anchor (4) is formed by four limbs (6), two opposing limbs being lengthened at their front end with an extension (7) resting on the supporting surface (8) of the collar (3).

4. Expansible anchor according to claim 1 or 2, **characterized in that** the cross-sectional weakenings are formed by semi-circular openings (11) reducing the width of the limbs (6).

5. Expansible anchor according to claim 1 or 2, **characterized in that** the cross-sectional weakenings are formed by notches (12,13) reducing the wall thickness of the limbs (6).

6. Expansible anchor according to claim 5, **characterized in that** the notches (12) are arranged as cross-sectional weakenings at the transition to the head sleeve (5) at the outer surface and the notches (13) are arranged as cross-sectional weakenings in the middle region at the inner surface of the limbs (6).

7. Expansible anchor according to claim 1 or 2, **characterized in that** the expansible anchor (4) is lengthened with a spacer sleeve (14) mounted on its head sleeve (5), beyond which spacer sleeve the threaded bolt (2) projects with a part of its threaded section (18).

8. Expansible anchor according to claim 1 or 2, **characterized in that** a shank part (30) having an internal thread (31) and screw head (33) is arranged to be screwed onto the portion of threaded bolt (2) projecting beyond the expansible sleeve (4).

9. Expansible anchor according to claim 8, **characterized in that** a low friction ring (34) is arranged between the shank part (30) and the head sleeve (5) of the expansible sleeve (4).

10. Expansible anchor according to claim 1 or 2, **characterized in that** one or more radially protruding projections (20) are arranged on the threaded bolt (2), which are located level with the middle bending point (6).

11. Expansible anchor according to claim 1 or 2, **characterized in that** the limbs (6) are to a small degree pre-bent.

12. Expansible anchor according to claim 1 or 2, **characterized in that** the limbs (6) of the expansible sleeve (4) are formed by helically arranged slits (10).

## Revendications

1. Cheville expansible en métal pour une fixation dans des matériaux de construction souples ou présentant des cavités comme le béton poreux, les pierres de construction à chambre creuse ou similaires, constitué par une douille d'écartement (4) pouvant être écartée par le fléchissement de ses branches (6) formées par des fentes (10) et par un boulon fileté (2), sur l'extrémité avant duquel est disposée une collerette (3) présentant une surface d'appui (8), conçue perpendiculairement à l'axe longitudinal du dispositif d'ancrage à cheville expansible (1), pour la douille d'écartement (4), les branches (6) de la douille d'écartement (4) étant placées d'un seul tenant sur leur extrémité arrière sur une douille antérieure (5) et étant libres sur leur extrémité avant, les extrémités libres s'appuyant sur la surface d'appui (8) de la collerette (3), et moyennant quoi les branches (6) forment des points de flexion par des affaiblissements de section (11, 12, 13) à la transition des branches (6) avec la douille antérieure (5) et dans la zone centrale des branches, **caractérisé en ce que** des faces frontales (9) des extrémités libres des branches (6) sont conçues de façon concave.

2. Cheville expansible en métal pour la fixation dans des matériaux de construction souples ou présentant des cavités comme le béton poreux, les pierres de construction à chambre creuse ou similaires, constitué par une douille d'écartement (4) pouvant être écartée par le fléchissement de ses branches (6) formées par des fentes (10) et par un boulon fileté (2), sur l'extrémité avant duquel est disposée une collerette (3) présentant pour la douille d'écartement (4) une surface d'appui (8) conçue perpendiculairement à l'axe longitudinal du dispositif d'ancrage à cheville expansible, les branches (6) de la douille d'écartement (4) étant placées d'un seul tenant sur leur extrémité arrière sur une douille antérieure (5) et étant libres sur leur extrémité avant, les extrémités libres s'appuyant sur la surface d'appui (8) de la collerette (3), moyennant quoi les branches (6) forment des points de pliage par des affaiblissements de section (11, 12, 13) à la transition des branches (6) avec la douille antérieure (5) et dans la zone centrale des branches, **caractérisé en ce que** les faces frontales (9) des extrémités libres des branches (6) sont conçues de façon inclinée.

3. Cheville expansible selon la revendication 1 ou 2, **caractérisé en ce que** la douille d'écartement (4) est formée par quatre branches (6), deux branches se faisant face étant prolongées sur leur extrémité avant par un appendice (7) reposant sur la surface d'appui (8) de la collerette (3).

4. Cheville expansible selon la revendication 1 ou 2, **caractérisé en ce que** les affaiblissements de matériau sont formés par des évidements (11) semi-circulaires qui réduisent la largeur des branches (6).

5. Cheville expansible selon la revendication 1 ou 2, **caractérisé en ce que** les affaiblissements de section sont formés par des entailles (12, 13) qui réduisent l'épaisseur de paroi des branches (6).

6. Cheville expansible selon la revendication 5, **caractérisé en ce que** les entailles (12) sont disposées comme des affaiblissements de section à la transition avec la douille antérieure (5) sur la surface extérieure et les entailles (13) sous forme d'affaiblissements de section dans la zone centrale sur la surface interne des branches (6).

7. Cheville expansible selon la revendication 1 ou 2, **caractérisé en ce que** la douille d'écartement (4) est prolongée par une douille d'espacement (14) qui repose sur sa douille antérieure (5) et est dépassée par le boulon fileté (2) avec une partie de son tronçon fileté (18).

8. Cheville expansible selon la revendication 1 ou 2, **caractérisé en ce qu'**une partie de tige (30) avec filetage intérieur (31) et tête de vis (33) peut être vissée sur le tronçon du boulon fileté (2) qui dépasse de la douille d'écartement (4).

9. Cheville expansible selon la revendication 8, **caractérisé en ce qu'**une bague de glissement (34) est disposée entre la partie de tige (30) et la douille antérieure (5) de la douille d'écartement (4).

10. Cheville expansible selon la revendication 1 ou 2, **caractérisé en ce qu'**une saillie ou plusieurs saillies (20) débordant dans le sens radial sont disposées sur le boulon fileté (2) et se trouvent à la hauteur du point de flexion (6) central.

11. Cheville expansible selon la revendication 1 ou 2, **caractérisé en ce que** les branches (6) sont légèrement prépliées.

12. Cheville expansible selon la revendication 1 ou 2, **caractérisé en ce que** les branches (6) de la douille d'écartement (4) sont formées par des fentes (10) disposées en hélice.
